(19) Europäisches Patentamt
European Patent Office
Office européen des brevets

(11) **EP 4 703 169 A1**

(12) **EUROPEAN PATENT APPLICATION**
published in accordance with Art. 153(4) EPC

(43) Date of publication:
04.03.2026 Bulletin 2026/10

(51) International Patent Classification (IPC):
**B60K 1/02** (2006.01)

(21) Application number: 23937339.2

(22) Date of filing: 27.12.2023

(86) International application number:
PCT/CN2023/142196

(87) International publication number:
WO 2024/234668 (21.11.2024 Gazette 2024/47)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 18.05.2023 CN 202310564282

(71) Applicant: Yutong Bus Co., Ltd.
Zhengzhou, Henan 450061 (CN)

(72) Inventors:
• LIU, Xiaowei
Zhengzhou, Henan 450061 (CN)
• ZHAO, Di
Zhengzhou, Henan 450061 (CN)
• LI, Bingbing
Zhengzhou, Henan 450061 (CN)
• LIU, Jie
Zhengzhou, Henan 450061 (CN)
• LIU, Dongfang
Zhengzhou, Henan 450061 (CN)
• HUANG, Kun
Zhengzhou, Henan 450061 (CN)
• WANG, Yongjian
Zhengzhou, Henan 450061 (CN)

(74) Representative: Gulde & Partner
Patent- und Rechtsanwaltskanzlei mbB
Berliner Freiheit 2
10785 Berlin (DE)

(54) **ELECTRIC DRIVE SYSTEM HAVING TWO PLANETARY GEAR SETS, VEHICLE AND GEAR SHIFTING METHOD**

(57) The present invention pertains to the technical field of electric drive systems, and specifically relates to an electric drive system having two planetary gear sets, a vehicle and a gear shifting method. The electric drive system includes a transmission housing, a first motor, a second motor, a first planetary gear set, a second planetary gear set, a connecting device, and a system output shaft. The first planetary gear set includes a first sun gear, a first ring gear, and a first planet carrier. The second planetary gear set includes a second sun gear, a second ring gear, and a second planet carrier. A rotor of the first motor is connected to the second sun gear, and a rotor of the second motor is connected to the first sun gear. The first planet carrier is connected to the second ring gear; and the second planet carrier is connected to the first ring gear and the system output shaft respectively. The connecting device is configured to fixedly connect the first planet carrier to the transmission housing, or fixedly connect the first planet carrier to the first ring gear. By the electric drive system having two planetary gear sets according to the present invention, power of the vehicle is not interrupted in a gear shifting process, thereby improving performance of an electric vehicle.

FIG. 1

**Description**

**TECHNICAL FIELD**

The present invention pertains to the technical field of electric drive systems, and specifically relates to an electric drive system having two planetary gear sets, a vehicle and a gear shifting method.

**BACKGROUND**

Electric vehicles are novel, energy-saving, and environment-friendly vehicles, and have enormous development potential and broad application prospects especially in a current environment with severe air pollution. The electric vehicles use motors instead of engines of conventional vehicles, the motors can be started with a load, and a service requirement of the vehicles under different working conditions is satisfied through proper configurations. This is an important difference from the engines.

It is no longer appropriate to use a multi-gear transmission in electric vehicles, but if a variable-speed rotating device is canceled, it is difficult to balance requirements such as gradeability and high-speed driving for vehicles, especially for small and medium-sized vehicles. It is necessary to redesign a power system of an electric vehicle according to operating characteristics of a motor. Currently, most electric vehicles use an electric drive system having two planetary gear sets, but the existing electric drive system having two planetary gear sets is a fixed-speed-ratio drive system and has no gear functions. As a result, a maximum speed and a high-torque output cannot be balanced.

An existing automated manual transmission (AMT) gear shifting process includes five stages: torque removal, shifting into neutral, speed adjustment, putting into gear, and torque reapplication. The torque removal refers to removing a driving torque on a system output shaft, and the torque reapplication refers to reapplying a torque to the system output shaft. In a gear shifting process, a power system cannot avoid a problem of power interruption from the torque removal stage to the torque reapplication stage. For example, a specification of a Chinese Patent with the authorization publication No. CN110886838B discloses a gear shifting method for an electric vehicle based on a two-gear AMT. When a gear is shifted from a first gear to a second gear, a torque on an input shaft of the AMT needs to be first removed to implement torque removal, before shifting into neutral is implemented, which leads to power interruption of the electric vehicle.

**SUMMARY**

Objectives of the present invention are to provide an electric drive system having two planetary gear sets that can implement uninterrupted power in a gear shifting process, to further provide a vehicle, so as to solve problems of jerking and poor riding experience caused by power interruption in the gear shifting process, and to further provide a gear shifting method, so as to solve a technical problem of power interruption of an electric drive system having two planetary gear sets in the gear shifting process.

To solve the foregoing technical problems, the present invention provides an electric drive system having two planetary gear sets that can implement uninterrupted power in a gear shifting process through certain control, including a transmission housing, a first motor, a second motor, a first planetary gear set, a second planetary gear set, a connecting device, and a system output shaft, where the first planetary gear set includes a first sun gear, a first ring gear, and a first planet carrier, the second planetary gear set includes a second sun gear, a second ring gear, and a second planet carrier, where a rotor of the first motor is connected to the second sun gear, and a rotor of the second motor is connected to the first sun gear; the first planet carrier is connected to the second ring gear, and the second planet carrier is connected to the first ring gear and the system output shaft; and the connecting device is configured to fixedly connect the first planet carrier to the transmission housing, or fixedly connect the first planet carrier to the first ring gear.

The electric drive system having two planetary gear sets has the following beneficial effects: The electric drive system having two planetary gear sets is in a first gear under a condition that the first planet carrier is fixedly connected to the transmission housing, and is in a second gear under a condition that the first planet carrier is fixedly connected to the first ring gear. The rotor of the first motor is connected to the second sun gear, and the rotor of the second motor is connected to the first sun gear. The first planet carrier is connected to the second ring gear, and the second planet carrier is connected to the first ring gear and the system output shaft respectively. Therefore, during gear shifting, the system output shaft can continue being driven by the first motor, a torque of the second motor can be adjusted, so that a difference between a torque applied to the system output shaft by the first motor and the torque applied to the system output shaft by the second motor is less than a first calibration value, and shifting into neutral is performed. After the shifting into neutral, the torque of the first motor is kept unchanged, and the torque of the second motor is adjusted, so that a difference between a rotational speed of the first planet carrier and a rotational speed of a first planetary gear set ring gear is less than a second calibration value, and the first planet carrier is fixedly connected to the transmission housing, thereby completing the gear shifting. During the entire process of gear shifting from the first gear to the second gear, the system output shaft is always driven by the motor, and the power is not interrupted. By the electric drive system having two planetary gear sets according to the present invention, it can be ensured that the power of the vehicle is not interrupted in the gear shifting process, thereby improving performance of the electric vehicle.

Preferably, the connecting device includes engagement teeth fixedly arranged on the transmission housing, an external engagement teeth connected to the first planet carrier, and a gear sleeve configured to fixedly connect the engagement teeth to the external engagement teeth at a first position or fixedly connect the external engagement teeth to the first ring gear at a second position, and the gear sleeve is controlled to switch between the first position and the second position by a putting-into-gear device.

Preferably, the connecting device includes a first clutch and a second clutch, where two ends of the first clutch that are mutually engaged or disengaged are arranged on the transmission housing and the first planet carrier respectively; two ends of the second clutch that are mutually engaged or disengaged are arranged on the first planet carrier and the first ring gear respectively; and engagement of the first clutch and disengagement of the second clutch or disengagement of the first clutch and engagement of the second clutch are controlled by a putting-into-gear device.

Preferably, the first motor, the second motor, the first planetary gear set, and the second planetary gear set are sequentially arranged inside the transmission housing from front to rear, an output shaft of the first motor freely passes through a hollow output shaft of the second motor and is connected to the sun gear of the second planetary gear set, and the hollow rotor of the second motor is connected to the first planetary gear set sun gear, or the first motor, the second planetary gear set, the first planetary gear set, and the second motor are sequentially arranged inside the transmission housing from front to rear, and the system output shaft passes through the hollow output shaft of the second motor to output power to a drive axle outside and behind the transmission housing.

The electric drive system having two planetary gear sets has the beneficial effects that the first motor, the second motor, the first planetary gear set, and the second planetary gear set are integrated inside the transmission housing, so that high integration is implemented, the product size is reduced, a power system can be arranged more easily, and transmission efficiency of the system is improved.

To solve the foregoing technical problems, the present invention further provides a gear shifting method based on the electric drive system having two planetary gear sets according to the present invention, including the following steps:

(1) controlling operating states of a first motor and a second motor, so that the first motor drives a system output shaft independently to satisfy a required torque of a driver, and adjusting a torque of the second motor in real time, so that a difference between a torque applied to the system output shaft by the first motor and the torque applied to the system output shaft by the second motor is less than a first calibration value;

(2) disengaging a transmission housing from a first planet carrier by a connecting device when the difference between the torque applied to the system output shaft by the first motor and the torque applied to the system output shaft by the second motor is less than the first calibration value, to complete a shifting-into-neutral operation;

(3) keeping the torque of the first motor unchanged and adjusting the torque of the second motor after shifting into neutral, so that a difference between a rotational speed of the first planet carrier and a rotational speed of a first planetary gear set ring gear is less than a second calibration value; and

(4) fixedly connecting, by a second connecting device, the first planet carrier to the transmission housing when the difference between the rotational speed of the first planet carrier and the rotational speed of the first ring gear is less than the second calibration value, to complete gear shifting.

The gear shifting method has the following beneficial effects: By the gear shifting method according to the present invention, when a gear is shifted from a first gear to a second gear, gear shifting can be implemented without removing the torque on the system output shaft, and the problem of power interruption is avoided. By the gear shifting method based on the electric drive system having two planetary gear sets according to the present invention, it can be ensured that the power of the electric vehicle is not interrupted in the process of gear shifting from the first gear to the second gear, so that the performance of the electric vehicle is better.

Preferably, in step (1), an output torque $T_{MG1Trgt}$ of the first motor driving the system output shaft independently to satisfy the required torque of the driver is:

$$T_{MG1Trgt} = T_{Trgt} * (k_1 + 1)/(k_1 + k_2 + 1),$$

where $T_{Trgt}$ is the required torque of the driver, $k_1$ is a ratio of a number of teeth of the first ring gear to a number of teeth of a first sun gear, and $k_2$ is a ratio of a number of teeth of a second ring gear to a number of teeth of a second sun gear.

Preferably, in step (1), an output torque $T_{MG21Trgt1}$ of the second motor that causes the difference between the torque applied to the system output shaft by the first motor and the torque applied to the system output shaft by the second motor to be less than the first calibration value is:

$$T_{MG2Trgt1} = T_{Trgt} * k_2/(k_1 + k_2 + 1),$$

where $T_{Trgt}$ is the required torque of the driver, $k_1$ is a ratio of a number of teeth of the first ring gear to a number of teeth of a first sun gear, and $k_2$ is a ratio of a number of teeth of a second ring gear to a number of teeth of a second sun gear.

Preferably, in step (3), to make the difference between the rotational speed of the first planet carrier and the rotational speed of the first planetary gear set ring gear less than the second calibration value, a second target torque $T_{MG2Trg2}$ that the second motor needs to output is:

$$T_{MG2Trg2} = T_{MG1} * k_1/(k_2 + 1) + T_{nSpdErr},$$

where $T_{MG1}$ is the torque of the first motor, $k_1$ is the ratio of the number of the teeth of the first ring gear to the number of the teeth of the first sun gear, $k_2$ is the ratio of the number of the teeth of the second ring gear to the number of the teeth of the second sun gear, and $T_{nSpdErr}$ represents a corrected torque of the second target torque calculated according to the difference $\Delta nSpdErr$ between the rotational speed of the first planet carrier and the rotational speed of the first ring gear.

To solve the foregoing technical problems, the present invention further provides an electric vehicle that can implement uninterrupted power in a gear shifting process through certain control, including the electric drive system according to the present invention.

The electric vehicle has the following beneficial effects: The electric drive system of the electric vehicle according to the present invention is in a first gear under a condition that the first planet carrier is fixedly connected to the transmission housing, and is in a second gear under a condition that the first planet carrier is fixedly connected to the first ring gear. The rotor of the first motor is connected to the second sun gear, and the rotor of the second motor is connected to the first sun gear. The first planet carrier is connected to the second ring gear, and the second planet carrier is connected to the first ring gear and the output shaft respectively. Therefore, during gear shifting, the system output shaft can continue being driven by the first motor, a torque of the second motor can be adjusted, so that a difference between a torque applied to the system output shaft by the first motor and the torque applied to the system output shaft by the second motor is less than a first calibration value, and shifting into neutral is performed. After the shifting into neutral, the torque of the first motor is kept unchanged, and the torque of the second motor is adjusted, so that a difference between a rotational speed of the first planet carrier and a rotational speed of a first planetary gear set ring gear is less than a second calibration value, and the first planet carrier is fixedly connected to the transmission housing, thereby completing the gear shifting. During the entire gear shifting process, the system output shaft is always driven by the motor, and the power is not interrupted. By the electric vehicle according to the present invention, it can be ensured that the power of the vehicle is not interrupted in the process of gear shifting from the first gear to the second gear, thereby solving the problems of jerking and poor riding experience caused by power interruption in the gear shifting process.

Preferably, the vehicle implements gear shifting by the following method including:

(1) controlling operating states of a first motor and a second motor, so that the first motor drives a system output shaft independently, and adjusting torques of the first motor and the second motor in real time according to a required torque of a driver, so that a difference between the torque applied to the system output shaft by the first motor and the torque applied to the system output shaft by the second motor is less than a first calibration value;
(2) disengaging a transmission housing from a first planet carrier by a connecting device when the difference between the torque applied to the system output shaft by the first motor and the torque applied to the system output shaft by the second motor is less than the first calibration value, to complete a shifting-into-neutral operation;
(3) keeping the torque of the first motor unchanged and adjusting the torque of the second motor after shifting into neutral, so that a difference between a rotational speed of the first planet carrier and a rotational speed of a first planetary gear set ring gear is less than a second calibration value; and
(4) fixedly connecting the first planet carrier to the first ring gear by a connecting device when the difference between the rotational speed of the first planetary gear set planet carrier and the rotational speed of the first planetary gear set ring gear is less than the second calibration value, to complete gear shifting.

## BRIEF DESCRIPTION OF THE DRAWINGS

FIG. 1 is a schematic structural diagram of a first implementation of an electric drive system having two planetary gear sets according to Embodiment 1 of the present invention;
FIG. 2 is a schematic structural diagram of a second implementation of the electric drive system having two planetary gear sets according to Embodiment 1 of the present invention;

FIG. 3 is a flowchart of steps of a gear shifting method according to the present invention;

FIG. 4 is a schematic lever analysis diagram of a planetary gear set;

FIG. 5 is a schematic structural diagram of a third implementation of an electric drive system having two planetary gear sets according to Embodiment 2 of the present invention; and

FIG. 6 is a schematic structural diagram of a fourth implementation of the electric drive system having two planetary gear sets according to Embodiment 2 of the present invention.

Description of reference numerals: 1: transmission housing; 2: first motor; 3: second motor; 4: engagement teeth; 5A: first planet carrier; 5B: first ring gear; 5C: first sun gear; 6A: second planet carrier; 6B: second ring gear; 6C: second sun gear; 7: system output shaft; 4A: first clutch; 4B: second clutch.

## DETAILED DESCRIPTION

To make the objectives, technical solutions, and advantages of the present invention clearer, the present invention is further described in detail below with reference to the accompanying drawings and embodiments. It should be understood that the specific embodiments described herein are only used to explain the present invention, but not to limit the present invention. That is, the described embodiments are only some rather than all embodiments of the present invention. Therefore, the following detailed description of the embodiments of the present invention provided in the accompanying drawings is not intended to limit the scope of the present invention as claimed, but is merely representative of the selected embodiments of the present invention. All other embodiments obtained by a person skilled in the art based on the embodiments of the present invention without creative efforts shall fall within the protection scope of the present invention.

**Embodiments of an electric drive system having two planetary gear sets**

Embodiment 1

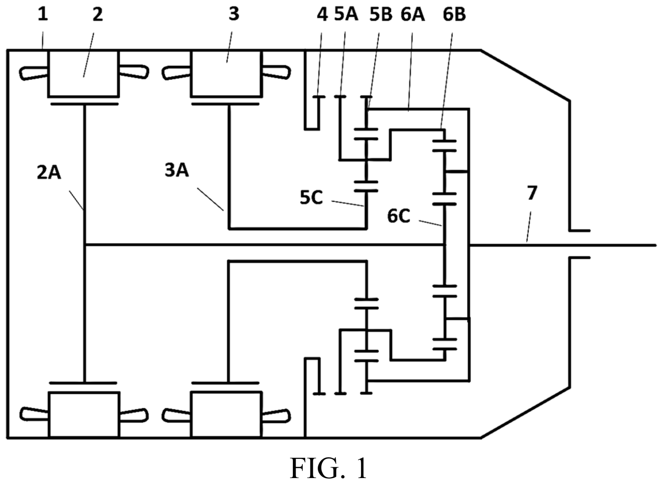

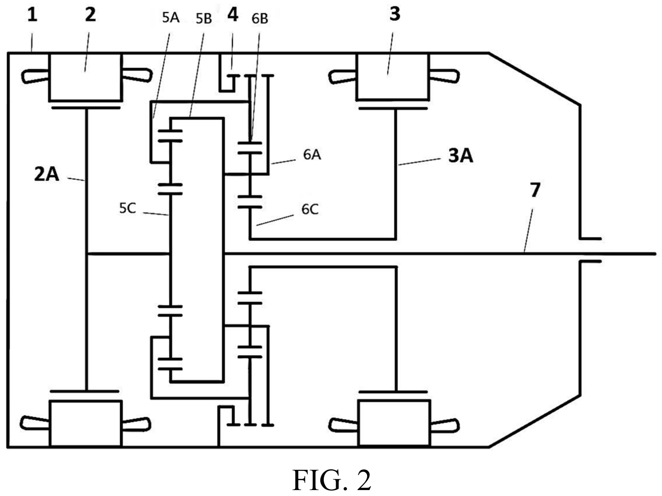

As shown in FIG. 1 and FIG. 2, the electric drive system having two planetary gear sets according to the present invention includes a transmission housing 1, a first motor 2, a second motor 3, a first planetary gear set, a second planetary gear set, a putting-into-gear device (not shown in the figure), a system output shaft 7, and a connecting device configured to fixedly connect a first planet carrier 5A to the transmission housing or fixedly connect the first planet carrier 5A to a first ring gear 5B. The connecting device includes engagement teeth 4 arranged on the transmission housing 1, a gear sleeve (not shown in the figure), external engagement teeth arranged on the first planet carrier 5A, and external engagement teeth of the first ring gear 5B. The gear sleeve is pushed by the putting-into-gear device, so that the engagement teeth 4 may be fixedly connected to the external engagement teeth on the first planet carrier 5A by the gear sleeve, or the external engagement teeth on the first planet carrier 5A may be fixedly connected to the external engagement teeth of the first ring gear 5B by the gear sleeve.

The first planetary gear set includes a first sun gear 5C, a first ring gear 5B, and a first planet carrier 5A, and the second planetary gear set includes a second sun gear 6C, a second ring gear 6B, and a second planet carrier 6A. The first motor 2 includes a rotor of the first motor 2A, and the second motor 3 includes a rotor of the second motor 3A. External engagement teeth are arranged on the first planet carrier 5A, to be fixedly connected to the engagement teeth 4 or the first ring gear 5B by the gear sleeve.

Specifically, as shown in FIG. 1, the first motor 2, the second motor 3, the first planetary gear set, and the second planetary gear set may be sequentially arranged inside the transmission housing from front to rear, an output shaft of the first motor freely passes through a hollow output shaft of the second motor to be connected to the sun gear of the second planetary gear set (namely the second sun gear 6C), and the hollow output shaft of the second motor is connected to the sun gear of the first planetary gear set (namely the first sun gear 5C). In addition, the first planet carrier 5A is connected to the second ring gear 6B, and the first ring gear 5B is connected with the second planet carrier 6A.

Alternatively, as shown in FIG. 2, the first motor 2, the first planetary gear set, the second planetary gear set, and the second motor 3 may be sequentially arranged inside the transmission housing from front to rear, and the system output shaft 7 passes through the hollow output shaft of the second motor to output power to a drive axle outside and behind the transmission housing. The first motor 2, the second motor 3, and the engagement teeth 4 are all fixedly connected to the transmission housing 1. The rotor of the first motor 2A is connected to the first sun gear 5C, and the rotor of the second motor 3A is connected to the second sun gear 6C. The first planet carrier 5A is connected to the second ring gear 6B. The second planet carrier 6A is connected to the first ring gear 5B and the system output shaft 7. The first motor 2, the second motor 3, the first planetary gear set, and the second planetary gear set are all arranged inside the transmission housing.

The system output shaft 7 of the present invention is in transmission connection with the second planet carrier 6A. Because the second planet carrier 6A is connected to the first ring gear 5B, it may also be understood that the system output shaft 7 of the present invention is connected to the first ring gear 5B.

With a configuration of the drive system shown in FIG. 1 as an example, an operating principle and an operating process of the electric drive system having two planetary gear sets in this embodiment are as follows:

An operating principle of a first-gear fixed-speed-ratio drive mode is as follows: The external engagement teeth on the first planet carrier 5A are fixedly connected to the engagement teeth 4 through the gear sleeve by the putting-into-gear device. In this case, the first planet carrier 5A and the second ring gear 6B are simultaneously locked to the transmission housing 1, and the first motor 2 and the second motor 3 may simultaneously output torques to drive the system output shaft 7, or may separately output a torque to drive the system output shaft 7. After the first planet carrier 5A, the second ring gear 6B, and the engagement teeth 4 are engaged by the putting-into-gear device, a torque direction and a rotational speed direction of the rotor of the first motor 2A are the same as a torque direction and a rotational speed direction of the system output shaft 7, and a torque direction and a rotational speed direction of the rotor of the second motor 3A are opposite to the torque direction and the rotational speed direction of the system output shaft 7.

Under a condition of independent driving by the first motor 2, an expression of a torque outputted by the system output shaft 7 is:

$$T_{out} = T_{MG1} * (k_2 + 1) \qquad (1).$$

Under a condition of independent driving by the second motor 3, an expression of a torque outputted by the system output shaft 7 is:

$$T_{out} = T_{MG2} * k_1 \qquad (2).$$

Under a condition of simultaneous driving by the first motor 2 and the second motor 3, an expression of a torque outputted by the system output shaft 7 is:

$$T_{out} = T_{MG1} * (k_2 + 1) + T_{MG2} * k_1 \qquad (3).$$

In formula (1) to formula (3), $k_1$ is a ratio of a number of teeth of the first ring gear 5B to a number of teeth of the first sun gear 5C, $k_2$ is a ratio of a number of teeth of the second ring gear 6B to a number of teeth of the second sun gear 6C, $T_{out}$ is an output torque of the system output shaft 7, $T_{MG1}$ is an actual torque of the first motor 2, and $T_{MG2}$ is an actual torque of the second motor 3.

In this embodiment, the system output shaft of the electric drive system having two planetary gear sets may be driven independently by the first motor 2 or the second motor 3, or may be simultaneously driven by the two motors. On a stationary road section, when a torque required by the system output shaft is small, only one motor may be used for driving to reduce energy consumption. On an uphill road section, when a torque required by the system output shaft is large, the two motors may be used for simultaneously driving to increase vehicle power, so that power consumption is reduced while function and performance of the electric vehicle are ensured.

An operating principle of a second-gear fixed-speed-ratio drive mode is as follows: The external engagement teeth on the first planet carrier 5A are fixedly connected to the first ring gear 5B through the gear sleeve by the putting-into-gear device. That is, the first planet carrier 5A and the second ring gear 6B are locked to the first ring gear 5B and the second planet carrier 6A, and the two planetary gear sets are locked into a whole. In this case, this system is equivalent to a fixed-speed-ratio drive train with a speed ratio of 1, and the torque direction and the rotational speed direction of the rotor of the first motor 2A and the rotor of the second motor 3A are both the same as the torque direction and the rotational speed direction of the system output shaft 7.

Under a condition of independent driving by the first motor 2, an expression of a torque outputted by the system output shaft 7 is:

$$T_{out} = T_{MG1} \qquad (4).$$

Under a condition of independent driving by the second motor 3, an expression of a torque outputted by the system output shaft 7 is:

$$T_{out} = T_{MG2} \qquad (5).$$

Under a condition of simultaneous driving by the first motor 2 and the second motor 3, an expression of a torque outputted by the system output shaft 7 is:

$$T_{out} = T_{MG1} + T_{MG2} \qquad\qquad (6).$$

In formula (4) to formula (6), $T_{out}$ is an output torque of the system output shaft 7, $T_{MG1}$ is an actual torque of the first motor 2, and $T_{MG2}$ is an actual torque of the second motor 3.

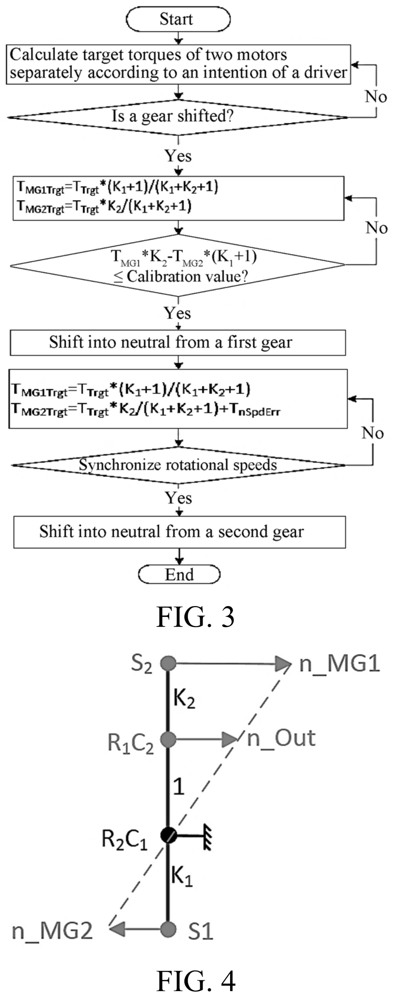

A gear shifting process includes a process of gear shifting from a first gear to a second gear and a process of gear shifting from the second gear to the first gear. As shown in FIG. 3, the process of gear shifting from the first gear to the second gear includes the following steps:

S1: Maintain a torque of a system output shaft through independent driving by a first motor 2, and adjust a torque of a second motor 3 in real time according to a required torque of a driver, so that a difference between a torque applied to the system output shaft 7 by the first motor 2 and the torque applied to the system output shaft 7 by the second motor 3 is less than a first calibration value.

During gear shifting, if the two motors are simultaneously driving the system output shaft or the second motor is driving the system output shaft independently, operating states of the first motor and the second motor are controlled by a motor control device, so that the first motor drives the system output shaft independently.

When the difference between the torque applied to the system output shaft by the first motor and the torque applied to the system output shaft by the second motor is less than the first calibration value, a shifting-into-neutral condition is satisfied.

A torque applied to the system output shaft in real time by the first motor is $T_{MG1} * k_2$ (7).

A torque applied to the system output shaft in real time by the second motor is $T_{MG2} * (k_1 + 1)$ (8).

In formula (7) and formula (8), $T_{MG1}$ is an actual torque of the first motor 2, and $T_{MG2}$ is an actual torque of the second motor 3.

The required torque of the driver is equal to a sum of an output torque of the first motor 2 and an output torque of the second motor 3, with an expression as follows:

$$T_{Trgt} = T_{MG1} + T_{MG2} = T_{MG1} * ((k_1 + k_2 + 1)/(k_1 + 1)) \qquad\qquad (9).$$

An output torque $T_{MG1Trgt}$ of the first motor driving the system output shaft independently to satisfy the required torque of the driver is:

$$T_{MG1Trgt} = T_{Trgt} * (k_1 + 1)/(k_1 + k_2 + 1) \qquad\qquad (10).$$

An output torque $T_{MG2Trgt1}$ of the second motor that causes the difference between the torque applied to the system output shaft by the first motor and the torque applied to the system output shaft by the second motor to be less than the first calibration value is:

$$T_{MG2Trgt1} = T_{Trgt} * k_2/(k_1 + k_2 + 1) \qquad\qquad (11).$$

In formula (7) to formula (11), $T_{Trgt}$ is the required torque of the driver, $k_1$ is a ratio of a number of teeth of a first planetary gear set ring gear 5B to a number of teeth of a first planetary gear set sun gear 5C, $k_2$ is a ratio of a number of teeth of a second planetary gear set ring gear 6B to a number of teeth of a second planetary gear set sun gear 6C, $T_{MG1}$ is an actual torque of the first motor 2, and $T_{MG2}$ is an actual torque of the second motor 3.

The real-time torque of the second motor 2 may be calculated according to a lever analysis diagram of a planetary gear set shown in FIG. 4.

S2: Disengage engagement teeth 4 from a first planet carrier 5A by a putting-into-gear device when the difference between the torque applied to the system output shaft 7 by the first motor 2 and the torque applied to the system output shaft 7 by the second motor 3 is less than the first calibration value, to complete a shifting-into-neutral operation.

S3: Keep the torque $T_{MG1Trgt}$ of the first motor 2 unchanged and adjust the torque of the second motor 3 after shifting into neutral, so that a difference between a rotational speed of the first planet carrier 5A and a rotational speed of the first ring gear 5B (namely a second planet carrier 6A) is less than a second calibration value.

According to the difference between the rotational speed of the first planet carrier 5A and the rotational speed of the first ring gear 5B and the torque of the first motor 2, it can be deduced that to make the difference between the rotational speed of the first planet carrier 5A and the rotational speed of the first ring gear 5B less than the second calibration value, a second target torque $T_{MG2Trg2}$ that the second motor 3 needs to output is:

$$T_{MG2Trg2} = T_{MG1} * k_1/(k_2 + 1) + T_{nSpdErr} \qquad\qquad (12).$$

$$T_{nSpdErr} = K_P * \Delta nSpdErr + K_i * \int_0^t (\Delta nSpdErr)\, dt \qquad (13).$$

In formula (12) and formula (13), $T_{MG1}$ is the torque of the first motor, $k_1$ is the ratio of the number of the teeth of the first ring gear 5B to the number of the teeth of the first sun gear 5C, $k_2$ is the ratio of the number of the teeth of the second ring gear 6B to the number of the teeth of the second sun gear 6C, $T_{nSpdErr}$ represents a corrected target torque of the second target torque $T_{MG2Trg2}$ calculated according to the difference $\Delta nSpdErr$ between the rotational speed of the first planet carrier 5A and the rotational speed of the first ring gear 5B, $K_P$ is a proportional term for target torque calculation, $K_i$ is an integral term for target torque calculation, and t is a time taken to adjust the torque of the second motor 3 in step S3.

After the torque outputted by the second motor 3 is adjusted to the second target torque of the second motor 3, the difference between the rotational speed of the first planet carrier 5A and the rotational speed of the first planetary gear set ring gear 5B starts to quickly decrease.

S4: Connect the first planet carrier 5A, the first ring gear 5B, the second planet carrier 6A, and the second ring gear 6B together by a putting-into-gear device when the difference between the rotational speed of the first planet carrier 5A and the rotational speed of the first ring gear 5B is less than the calibration value, to complete putting into gear.

After putting into the second gear, the two motors are controlled to restore normal torques.

Embodiment 2 of an electric drive system having two planetary gear sets

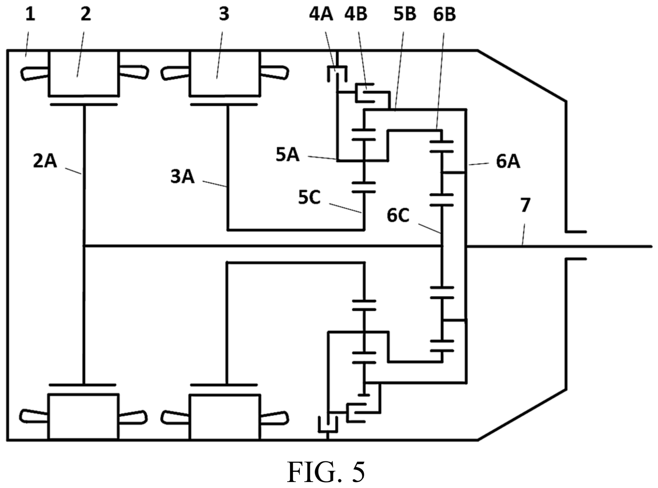

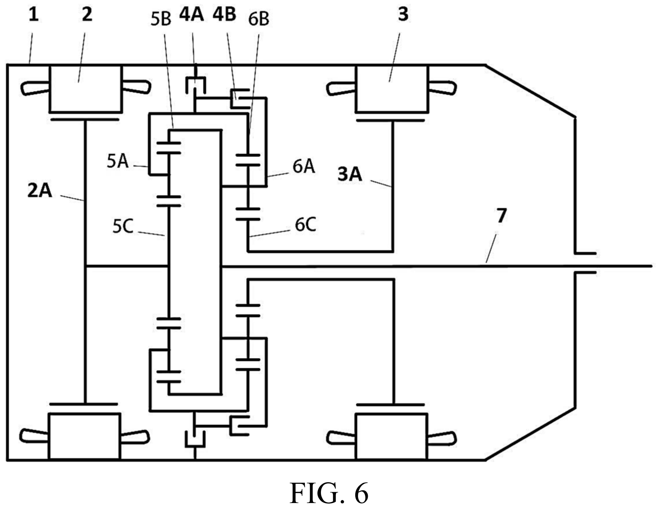

As shown in FIG. 5 and FIG. 6, in the electric drive system having two planetary gear sets in this embodiment, the engagement teeth and the putting-into-gear device are replaced with a first clutch 4A and a second clutch 4B based on the electric drive system having two planetary gear sets in Embodiment 1. Two ends of the first clutch 4A that are mutually engaged or disengaged are arranged on the transmission housing 1 and the first planet carrier 5A respectively; and two ends of the second clutch 4B that are mutually engaged or disengaged are arranged on the first planet carrier 5A and the first ring gear 5B respectively. Engagement of the first clutch 4A and disengagement of the second clutch 4B or disengagement of the first clutch 4A and engagement of the second clutch 4B are controlled by a putting-into-gear device to implement switching between two gears. Other parts of the electric drive system having two planetary gear sets in this embodiment are the same as those of the electric drive system having two planetary gear sets in Embodiment 1.

When the electric drive system having two planetary gear sets in this embodiment is in a first gear, the first planet carrier 5A is fixedly connected to the transmission housing 1 by the first clutch 4A. When the electric drive system having two planetary gear sets is in a second gear, the first planetary gear set planet carrier 5A is fixedly connected to the first ring gear 5B by the second clutch 4B. The electric drive system having two planetary gear sets in this embodiment has the same operating principles, operating processes, and technical effects as those of the electric drive system having two planetary gear sets in Embodiment 1 except the gear shifting method, which is slightly different from that of the electric drive system having two planetary gear sets in Embodiment 1. Details are not described herein.

By the electric drive system having two planetary gear sets according to the present invention, in an entire process of gear shifting from the first gear to the second gear, the system output shaft is always driven by the motor, and the power is not interrupted. By the electric drive system having two planetary gear sets according to the present invention, it can be ensured that power of a vehicle is not interrupted in the process of gear shifting from the first gear to the second gear, so that performance of the vehicle is better. The first motor, the second motor, the first planetary gear set, and the second planetary gear set are integrated in the transmission housing, so that high integration is implemented, the product size is reduced, a power system can be arranged more easily, and transmission efficiency of the system is improved. By the electric drive system having two planetary gear sets according to the present invention, the problems of jerking and poor riding experience caused by power interruption in the gear shifting process of the electric vehicle can be solved.

**Embodiment of a gear shifting method based on an electric drive system having two planetary gear sets**

The gear shifting method based on the electric drive system having two planetary gear sets according to the present invention includes a first-gear fixed-speed-ratio driving method, a second-gear fixed-speed-ratio driving method, and a method for shifting from a first gear to a second gear. The method for shifting from a first gear to a second gear includes the following steps:

(1) controlling operating states of a first motor and a second motor, so that the first motor drives a system output shaft independently, and adjusting torques of the first motor and the second motor in real time according to a required torque of a driver, so that a difference between the torque applied to the system output shaft by the first motor and the torque applied to the system output shaft by the second motor is less than a first calibration value;

(2) disengaging a transmission housing from a first planet carrier by a connecting device when the difference between the torque applied to the system output shaft by the first motor and the torque applied to the system output shaft by the second motor is less than the first calibration value, to complete a shifting-into-neutral operation;

(3) keeping the torque of the first motor unchanged and adjusting the torque of the second motor after shifting into neutral, so that a difference between a rotational speed of the first planet carrier and a rotational speed of a first planetary gear set ring gear is less than a second calibration value; and

(4) fixedly connecting the first planet carrier to the transmission housing by a connecting device when the difference between the rotational speed of the first planet carrier and the rotational speed of the first ring gear is less than the second calibration value, to complete gear shifting.

By the gear shifting method according to the present invention, when a gear is shifted from a first gear to a second gear, gear shifting can be implemented without removing the torque on the system output shaft, and the problem of power interruption is avoided. By the gear shifting method according to the present invention based on the electric drive system having two planetary gear sets according to the present invention, it can be ensured that the power of the electric vehicle is not interrupted in the process of gear shifting from the first gear to the second gear, so that the performance of the electric vehicle is better.

Specific details and technical effects of the driving method for the electric drive system having two planetary gear sets according to the present invention have been described in the embodiments of the electric drive system having two planetary gear sets. Details are not described herein.

## Embodiment of an electric vehicle

The electric vehicle according to the present invention includes a vehicle body and an electric drive system. The electric drive system includes a transmission housing, a first motor, a second motor, a first planetary gear set, a second planetary gear set, a first connecting device, a second connecting device, and a system output shaft. The first planetary gear set includes a first sun gear, a first ring gear, and a first planet carrier. The second planetary gear set includes a second sun gear, a second ring gear, and a second planet carrier. A rotor of the first motor is connected to the second sun gear, and a rotor of the second motor is connected to the first sun gear. The first planet carrier is connected to the second ring gear; and the second planet carrier is connected to the first ring gear and the system output shaft. The first connecting device is configured to fixedly connect the first planet carrier to the transmission housing, and the second connecting device is configured to fixedly connect the first planet carrier to the first ring gear. An operating principle, an operating process, and technical effects of the electric vehicle according to the present invention have been described in the embodiments of the electric drive system having two planetary gear sets. Details are not described herein.

## Claims

1. An electric drive system having two planetary gear sets, comprising a transmission housing, a first motor, a second motor, a first planetary gear set, a second planetary gear set, a connecting device, and a system output shaft, wherein the first planetary gear set comprises a first sun gear, a first ring gear, and a first planet carrier, the second planetary gear set comprises a second sun gear, a second ring gear, and a second planet carrier, wherein a rotor of the first motor is connected to the second sun gear, and a rotor of the second motor is connected to the first sun gear; the first planet carrier is connected to the second ring gear, and the second planet carrier is connected to the first ring gear and the system output shaft respectively; and the connecting device is configured to fixedly connect the first planet carrier to the transmission housing, or fixedly connect the first planet carrier to the first ring gear.

2. The electric drive system having two planetary gear sets according to claim 1, wherein the connecting device comprises engagement teeth fixedly arranged on the transmission housing, external engagement teeth connected to the first planet carrier, and a gear sleeve configured to fixedly connect the engagement teeth to the external engagement teeth at a first position or fixedly connect the external engagement teeth to the first ring gear at a second position, and the gear sleeve is controlled to switch between the first position and the second position by a putting-into-gear device.

3. The electric drive system having two planetary gear sets according to claim 1, wherein the connecting device comprises a first clutch and a second clutch, wherein two ends of the first clutch that are mutually engaged or disengaged are arranged on the transmission housing and the first planet carrier respectively; two ends of the second clutch that are mutually engaged or disengaged are arranged on the first planet carrier and the first ring gear respectively; and engagement of the first clutch and disengagement of the second clutch or disengagement of the first clutch and engagement of the second clutch are controlled by a putting-into-gear device.

4. The electric drive system having two planetary gear sets according to any one of claims 1 to 3, wherein the first motor, the second motor, the first planetary gear set, and the second planetary gear set are sequentially arranged inside the transmission housing from front to rear, an output shaft of the first motor freely passes through a hollow output shaft of the second motor to be connected to the sun gear of the second planetary gear set, and the hollow output shaft of the second motor is connected to the first planetary gear set sun gear, or the first motor, the second planetary gear set, the first planetary gear set, and the second motor are sequentially arranged inside the transmission housing from front to rear, and the system output shaft passes through the hollow output shaft of the second motor to output power to a drive axle outside and behind the transmission housing.

5. A gear shifting method based on the electric drive system having two planetary gear sets according to claim 1, comprising the following steps:

(1) controlling operating states of a first motor and a second motor, so that the first motor drives a system output shaft independently to satisfy a required torque of a driver, and adjusting a torque of the second motor in real time, so that a difference between a torque applied to the system output shaft by the first motor and a torque applied to the system output shaft by the second motor is less than a first calibration value;
(2) disengaging a transmission housing from a first planet carrier by a connecting device when the difference between the torque applied to the system output shaft by the first motor and the torque applied to the system output shaft by the second motor is less than the first calibration value, to complete a shifting-into-neutral operation;
(3) keeping the torque of the first motor unchanged and adjusting the torque of the second motor after shifting into neutral, so that a difference between a rotational speed of the first planet carrier and a rotational speed of a first planetary gear set ring gear is less than a second calibration value; and
(4) fixedly connecting the first planet carrier to the transmission housing by a connecting device when the difference between the rotational speed of the first planet carrier and the rotational speed of the first ring gear is less than the second calibration value, to complete gear shifting.

6. The gear shifting method according to claim 5, wherein in step (1), an output torque $T_{MG1Trgt}$ of the first motor driving the system output shaft independently to satisfy the required torque of the driver is:

$$T_{MG1Trgt} = T_{Trgt} * (k_1 + 1)/(k_1 + k_2 + 1),$$

wherein $T_{Trgt}$ is the required torque of the driver, $k_1$ is a ratio of a number of teeth of the first ring gear to a number of teeth of a first sun gear, and $k_2$ is a ratio of a number of teeth of a second ring gear to a number of teeth of a second sun gear.

7. The gear shifting method according to claim 5, wherein in step (1), an output torque $T_{MG2Trgt1}$ of the second motor that causes the difference between the torque applied to the system output shaft by the first motor and the torque applied to the system output shaft by the second motor to be less than the first calibration value is:

$$T_{MG2Trgt1} = T_{Trgt} * k_2/(k_1 + k_2 + 1),$$

wherein $T_{Trgt}$ is the required torque of the driver, $k_1$ is a ratio of a number of teeth of the first ring gear to a number of teeth of a first sun gear, and $k_2$ is a ratio of a number of teeth of a second ring gear to a number of teeth of a second sun gear.

8. The gear shifting method according to any one of claims 5 to 7, wherein in step (3), to make the difference between the rotational speed of the first planet carrier and the rotational speed of the first planetary gear set ring gear less than the second calibration value, a second target torque $T_{MG2Trg2}$ that the second motor needs to output is:

$$T_{MG2Trg2} = T_{MG1} * k_1/(k_2 + 1) + T_{nSpdErr},$$

wherein $T_{MG1}$ is the torque of the first motor, $k_1$ is the ratio of the number of the teeth of the first ring gear to the number of the teeth of the first sun gear, $k_2$ is the ratio of the number of the teeth of the second ring gear to the number of the teeth of the second sun gear, and $T_{nSpdErr}$ represents a corrected torque of the second target torque calculated according to the difference ΔnSpdErr between the rotational speed of the first planet carrier and the rotational speed of the first ring gear.

9. An electric vehicle, comprising the electric drive system having two planetary gear sets according to any one of claims 1 to 4.

10. The electric vehicle according to claim 9, wherein the vehicle implements gear shifting by the following method comprising:

(1) controlling operating states of a first motor and a second motor, so that the first motor drives a system output shaft independently, and adjusting torques of the first motor and the second motor in real time according to a required torque of a driver, so that a difference between a torque applied to the system output shaft by the first motor and a torque applied to the system output shaft by the second motor is less than a first calibration value;
(2) disengaging a transmission housing from a first planet carrier by a connecting device when the difference between the torque applied to the system output shaft by the first motor and the torque applied to the system output shaft by the second motor is less than the first calibration value, to complete a shifting-into-neutral operation;
(3) keeping the torque of the first motor unchanged and adjusting the torque of the second motor after shifting into neutral, so that a difference between a rotational speed of the first planet carrier and a rotational speed of a first planetary gear set ring gear is less than a second calibration value; and
(4) fixedly connecting the first planet carrier to the first ring gear by a connecting device when the difference between the rotational speed of the first planetary gear set planet carrier and the rotational speed of the first planetary gear set ring gear is less than the second calibration value, to complete gear shifting.

FIG. 1

FIG. 2

Start

Calculate target torques of two motors separately according to an intention of a driver

Is a gear shifted? — No

Yes

$T_{MG1Trgt}=T_{Trgt}*(K_1+1)/(K_1+K_2+1)$
$T_{MG2Trgt}=T_{Trgt}*K_2/(K_1+K_2+1)$

$T_{MG1}*K_2-T_{MG2}*(K_1+1)$
$\leq$ Calibration value? — No

Yes

Shift into neutral from a first gear

$T_{MG1Trgt}=T_{Trgt}*(K_1+1)/(K_1+K_2+1)$
$T_{MG2Trgt}=T_{Trgt}*K_2/(K_1+K_2+1)+T_{nSpdErr}$

Synchronize rotational speeds — No

Yes

Shift into neutral from a second gear

End

FIG. 3

$S_2$ — n_MG1

$K_2$

$R_1C_2$ — n_Out

1

$R_2C_1$

$K_1$

n_MG2 — S1

FIG. 4

FIG. 5

FIG. 6

## INTERNATIONAL SEARCH REPORT

| | International application No. |
|---|---|
| | **PCT/CN2023/142196** |

**A. CLASSIFICATION OF SUBJECT MATTER**

B60K1/02(2006.01)i

According to International Patent Classification (IPC) or to both national classification and IPC

**B. FIELDS SEARCHED**

Minimum documentation searched (classification system followed by classification symbols)

IPC:B60K,F16H

Documentation searched other than minimum documentation to the extent that such documents are included in the fields searched

Electronic data base consulted during the international search (name of data base and, where practicable, search terms used)

CNTXT, ENTXTC, VEN, CNKI: 宇通, 刘小伟, 赵狄, 李兵兵, 刘杰, 刘东方, 黄琨, 王永建, 第一, 第二, 行星, 电机, 马达, 电动机, 锁, 整体, 调节, 调整, 扭矩, 转矩, first, second, planet+, motor, lock+, adjust, torque

**C. DOCUMENTS CONSIDERED TO BE RELEVANT**

| Category* | Citation of document, with indication, where appropriate, of the relevant passages | Relevant to claim No. |
|---|---|---|
| PX | CN 116587823 A (YUTONG BUS CO., LTD.) 15 August 2023 (2023-08-15) claims 1-10 | 1-10 |
| X | CN 106314123 A (FUJIAN ZHONGQING AUTOMOBILE TECHNOLOGY CO., LTD.) 11 January 2017 (2017-01-11) description, paragraphs 10-37, and figure 1 | 1, 4, 9 |
| Y | CN 106314123 A (FUJIAN ZHONGQING AUTOMOBILE TECHNOLOGY CO., LTD.) 11 January 2017 (2017-01-11) description, paragraphs 10-37, and figure 1 | 1-10 |
| Y | CN 109578535 A (CHINA NORTH VEHICLE RESEARCH INSTITUTE) 05 April 2019 (2019-04-05) description, paragraphs 45-140, and figure 1 | 1-10 |
| Y | CN 114475192 A (GUANGZHOU AUTOMOBILE GROUP CO., LTD.) 13 May 2022 (2022-05-13) description, paragraphs 27-120, and figure 1 | 5-8, 10 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **21 March 2024** | **03 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/142196**

| C. | DOCUMENTS CONSIDERED TO BE RELEVANT | |
|---|---|---|
| Category* | Citation of document, with indication, where appropriate, of the relevant passages | Relevant to claim No. |
| A | CN 110329055 A (ZHEJIANG GEELY AUTOMOBILE HOLDINGS LTD. et al.) 15 October 2019 (2019-10-15)<br>entire document | 1-10 |
| A | CN 107933287 A (GUANGXI YUCHAI MACHINERY CO., LTD.) 20 April 2018 (2018-04-20)<br>entire document | 1-10 |
| A | DE 102016200843 A1 (SCHAEFFLER TECHNOLOGIES AG.) 27 July 2017 (2017-07-27)<br>entire document | 1-10 |

Form PCT/ISA/210 (second sheet) (July 2022)

**INTERNATIONAL SEARCH REPORT**
Information on patent family members

International application No.

**PCT/CN2023/142196**

| Patent document cited in search report | | | Publication date (day/month/year) | Patent family member(s) | | | Publication date (day/month/year) |
|---|---|---|---|---|---|---|---|
| CN | 116587823 | A | 15 August 2023 | None | | | |
| CN | 106314123 | A | 11 January 2017 | None | | | |
| CN | 109578535 | A | 05 April 2019 | CN | 109578535 | B | 23 April 2021 |
| CN | 114475192 | A | 13 May 2022 | None | | | |
| CN | 110329055 | A | 15 October 2019 | None | | | |
| CN | 107933287 | A | 20 April 2018 | None | | | |
| DE | 102016200843 | A1 | 27 July 2017 | DE | 102016200843 | B4 | 02 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110886838 B